(19) Europäisches Patentamt
European Patent Office
Office européen des brevets

(11) **EP 1 798 018 A1**

(12) **EUROPEAN PATENT APPLICATION**
published in accordance with Art. 158(3) EPC

(43) Date of publication:
**20.06.2007 Bulletin 2007/25**

(51) Int Cl.:
**B29C 55/14** (2006.01)   **C08J 5/18** (2006.01)
**B29K 77/00** (2006.01)   **C08L 77/00** (2006.01)

(21) Application number: **05770333.2**

(22) Date of filing: **10.08.2005**

(86) International application number:
**PCT/JP2005/014621**

(87) International publication number:
**WO 2006/022139 (02.03.2006 Gazette 2006/09)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.08.2004 JP 2004245743**

(71) Applicant: **Toyo Boseki Kabushiki Kaisha Osaka-shi, Osaka 530-8230 (JP)**

(72) Inventors:
• **NISHI, Tadashi,**
  **c/o Toyo Boseki Kabushiki Kaisha**
  **Inuyama-shi, Aichi,**
  **484-8508 (JP)**
• **MIYAGUCHI, Yoshinori**
  **c/o Toyo Boseki Kabushiki Kaisha**
  **Inuyama-shi Aichi,**
  **484-8508 (JP)**
• **ODA, Naonobu,**
  **c/o Toyo Boseki Kabushiki Kaisha**
  **Inuyama-shi, Aichi,**
  **484-8508 (JP)**

(74) Representative: **Weber, Thomas**
  **Patentanwälte**
  **von Kreisler-Selting-Werner,**
  **Postfach 10 22 41**
  **50462 Köln (DE)**

(54) **BIAXIALLY ORIENTED POLYAMIDE-BASED RESIN FILM AND METHOD FOR PRODUCTION THEREOF**

(57)     [Problem] Provision of a biaxially oriented polyamide resin film superior in transparency and slipperiness under high humidity, which is free of curling during boil processing and misalignment due to moisture absorption.

[Solving means] The biaxially oriented polyamide resin film of the present invention is formed by drawing in two steps, in the longitudinal direction, a non-oriented sheet made from a polyamide resin containing fine particles for forming a surface protrusion, and drawing the film in the transverse direction by a sequential biaxial drawing method, and shows a misalignment due to moisture absorption of 2.0 - 4.0 mm and a boil distortion of 2 - 3%.

FIG. 1

EP 1 798 018 A1

## Description

## Technical Field

The present invention relates to a strong biaxially oriented polyamide film superior in resistance to pinhole, which can be laminated on an olefin resin film such as polyethylene, polypropylene and the like and preferably used for packaging retort foods and the like and a production method thereof. Particularly, the present invention relates to a biaxially oriented polyamide film superior in handling workability under high humidity environment, further a biaxially oriented polyamide film simultaneously having transparency or slip property, and a production method thereof.

## Background Art

In general, since biaxially oriented polyamide stretched films are superior in mechanical properties and thermal properties, as well as have high gas barrier property, they are widely used as packaging materials for various foods etc. and the like. However, conventional biaxially oriented polyamide films have defects in that they soften under high humidity environment due to moisture absorption, thus resulting in degraded slip property, and therefore, various problems are sometimes caused by insufficient slip property particularly during rainy season.

Thus, as a means for improving the slip property of polyamide resin films, (1) a method including adding fine particles such as silica, kaolin and the like to a resin and protruding these fine particles from the film surface by a drawing treatment to form ultrafine protrusions, thereby reducing the contact area between films, (2) a method including adding an organic lubricant such as bisamide compounds of higher fatty acids and the like to a polyamide resin to reduce interactions of the contact area between films and the like have been proposed. By the method of the above-mentioned (1), however, the amount of fine particles to be added needs to be increased to ensure satisfactory workability under high humidity, and a high addition amount of fine particles inconveniently degrades the transparency of the film. On the other hand, by the method of the above-mentioned (2), when the amount of an organic lubricant to be added is increased to achieve sufficient slip property, adhesiveness and wetting property during lamination on other film materials become poor, and processability of printing, vapor deposition and the like are inconveniently degraded.

To solve the problems of the above-mentioned conventional biaxially oriented polyamide resin film and simultaneously satisfy transparency and slipperiness, particularly slipperiness under high humidity, a method of adjusting the density of the protrusions formed by fine particles to be added to a polyamide resin for formation of the surface protrusion, and the area proportion of microvoids formed around the protrusions has been proposed (e.g., see patent reference 1).

According to the method of patent reference 1, slip property under high humidity (particularly, 75% RH) can be improved without degrading the mechanical properties and thermal properties of a biaxially oriented polyamide resin film, while maintaining high transparency.

patent reference 1: JP-A-9-272748

However, biaxially oriented polyamide resin films sometimes show anisotropic elongation due to moisture absorption under high humidity environment. When a biaxially oriented polyamide resin film associated with such anisotropy is subjected to a bag manufacture process or printing process under high humidity environment, the biaxially oriented polyamide resin film is curled and the efficiency of the bag manufacture process is inconveniently degraded, as well as the yield is lowered. The above-mentioned method of patent reference 1 is not effective for a decrease in the anisotropy of elongation under high humidity.

Biaxially oriented polyamide resin films are mostly formed into a bag by laminating the film on a polyolefin resin film such as polyethylene, polypropylene and the like, folding the laminate in two and sealing three sides thereof. Accordingly, the upper surface and the lower surface of the bag become the film surface of the same material. Accordingly, when the boiling water shrinkage proportion in the +45° direction relative to the film travel direction, namely, the longitudinal direction and that in the -45° direction are A and B, respectively, the direction A on the upper surface and the direction B on the lower surface of the bag are in the same direction relative to the bag. That is, the slant difference in the boiling water shrinkage proportion of the biaxially oriented polyamide resin film means the difference in the shrinkage proportion in the slant diagonal direction of the front and back surfaces of the bag, wherein a greater difference thereof causes easy retortion and marked curling of the bag.
The slant difference in the boiling water shrinkage proportion is caused by a change in the physical property in the width direction of a film that is produced when a polyamide non-oriented sheet is drawn in the longitudinal direction, then in the transverse direction, and subjected to a heat setting (i.e., sequential biaxial drawing method), and the difference becomes remarkably high particularly in the terminal portion.

Thus, a biaxially oriented polyamide resin film which is strong and superior in resistance to pinholes, and resistance to curling during a boiling water treatment, when, for example, the film is laminated on an olefin resin film such as polyethylene, polypropylene and the like and used for packaging retort foods and the like, even when the film is cut out from a terminal portion of a film immediately after film forming (see patent reference 2).

patent reference 2: JP-A-8-174663

However, even when the slant difference of the boiling water shrinkage proportion of a terminal portion of a biaxially oriented polyamide resin film immediately after film forming is suppressed, according to the method of the above-mentioned patent reference 2, since the biaxially oriented polyamide resin film may be curled when it is subjected to a bag manufacture process or printing process under high humidity environment, a further improvement in the efficiency of the bag manufacture process is desired.

## Brief Description of the Drawing

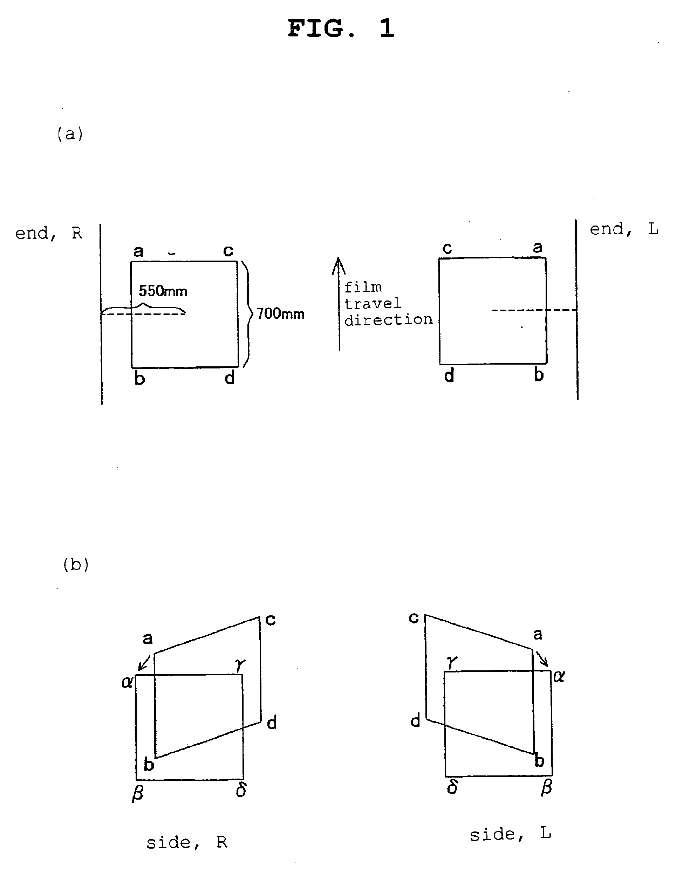

Fig. 1 explains a measurement method of misalignment due to moisture absorption.

## Disclosure of the Invention

## Problems to be Solved by the Invention

The present invention has been made with the above-mentioned background problem, and aims at providing a biaxially oriented polyamide resin film having good mechanical properties, good thermal properties, high transparency and reduced elongation anisotropy under high humidity, which is superior in slip property under high humidity.

## Means of Solving the Problems

The present inventors have conducted intensive studies in an attempt to solve the above-mentioned problems and completed the present invention. That is, of the present invention, the constitution of the invention described in claim 1 is a biaxially oriented film made of a polyamide resin, wherein the misalignment due to moisture absorption is 2.0 - 4.0 mm in width, and the boil distortion is 2 - 3%.

In this case, the haze of the aforementioned film is preferably 1 - 2%.

In this case, the kinetic friction coefficient of the aforementioned film at 65% RH is preferably 0.5 - 0.8.

The constitution of the invention described in claim 4 is a production method of a polyamide resin film, which comprises drawing, in the longitudinal direction, a substantially non-oriented sheet made from a polyamide resin containing fine particles for forming a surface protrusion, and drawing the film not less than 3-fold in the transverse direction by a sequential biaxial drawing method, wherein the above-mentioned longitudinal drawing comprises drawing 1.2- to 3.0-fold at a low temperature crystallization temperature (Tc)+5 - Tc+20°C for the first drawing and maintaining the film at not less than the glass transition temperature (Tg), and then drawing the film to 3.0- to 5.0-fold in the total longitudinal draw ratio at Tc - Tc+15°C for the second drawing.

The constitution of the invention described in claim 5 is that, in the invention described in claim 2, the first drawing ratio in the longitudinal drawing is greater than the second drawing ratio.

## Effect of the Invention

Since the biaxially oriented polyamide resin film of claim 1 shows low elongation anisotropy under high humidity, it is free of a curling phenomenon and shows very high workability in the bag manufacture process and printing process.

Since the biaxially oriented polyamide resin film described in claim 2 shows low elongation anisotropy under high humidity, a curling phenomenon does not occur. Thus, the workability in the bag manufacture process and printing process is very good. Moreover, since transparency is high, the film can be preferably used for various packaging uses.

Since the biaxially oriented polyamide resin film described in claim 3 shows low elongation anisotropy under high humidity, a curling phenomenon does not occur. Thus, the workability in the bag manufacture process and printing process is very good. Moreover, since the film is superior in slip property under high humidity, it can be preferably used for various packaging uses.

According to the production method of the biaxially oriented polyamide resin film described in claim 4, as mentioned above, a biaxially oriented polyamide resin film which is highly transparent and superior in slip property and workability in the printing process, bag manufacture process and the like can be produced in a high yield at a low cost.

According to the production method of the biaxially oriented polyamide resin film described in claim 5, as mentioned above, a biaxially oriented polyamide resin film which is highly transparent and superior in slip property and workability in the printing process, bag manufacture process and the like can be produced in a high yield at a low cost.

## Best Mode for Embodying the Invention

The embodiments of the biaxially oriented polyamide resin film of the present invention and a production method thereof are explained in detail in the following.

The biaxially oriented polyamide resin film of the present invention shows a misalignment due to moisture absorption of 2.0 - 4.0 mm and a boil distortion of 2 - 3%.

The biaxially oriented polyamide resin film preferably shows a haze of 1 - 2%. When the haze exceeds 2%, the transparency is not sufficiently improved and the film cannot be used for use requiring high transparency.

The biaxially oriented polyamide resin film preferably shows a $\mu$d at 65% RH of 0.5 - 0.8. When the $\mu$d at 65% RH exceeds 0.9, the slip property is not sufficiently improved, and the handling property during printing process does not become sufficient. Conversely, when the $\mu$d at 65% RH is 0.5 - 0.8, the film becomes too slippery, and winding misalignment easily occurs during winding of the film after biaxial drawing, which is not preferable.

In the present invention, the target is a biaxially oriented polyamide resin film in a terminal portion of a film immediately after film forming, which is suppressed to a boil distortion of 2 - 3%.

Moreover, the misalignment due to moisture absorption of the biaxially oriented polyamide resin film needs to be 2.0 - 4.0 mm. When the misalignment due to moisture absorption is not less than 4.0 mm, curling and the like are developed during processing such as printing and the like and the workability becomes poor. When the boil distortion is not less than 3%, the workability during bag manufacture process becomes unpreferably poor and the finished bag show low grade. It is preferably 2.0 - 3.5 mm.

In addition, the production method of the biaxially oriented polyamide resin film of the present invention is a production method comprising drawing a substantially non-oriented sheet made from a polyamide resin containing fine particles for forming surface protrusion, in the longitudinal direction and then in the transverse direction (width direction) by a sequential biaxial drawing method, wherein the above-mentioned longitudinal drawing comprises drawing 1.2-to 3.0-fold at a low temperature crystallization temperature (Tc) - Tc+30°C for the first drawing and maintaining the film at not less than the glass transition temperature (Tg), and then drawing the film to 3.0- to 5.0-fold in the total longitudinal draw ratio at Tc - Tc+15°C for the second drawing.

The polyamide resin to be used in the present invention is a polymer having an amide group in a molecule chain. Specific examples include polyamide resins such as nylon 6, nylon 7, nylon 11, nylon 12, nylon 66, nylon 6T, nylon MXD6, nylon 6I, nylon 46 and the like and copolymers, blends and alloys thereof can be mentioned.

As the fine particles for forming surface protrusion, one can be appropriately selected from inorganic lubricants such as silica, kaolin, zeolite and the like, organic lubricants of acrylic, polystyrene polymers and the like, and the like, and used. From the aspects of transparency and slip property, silica particles can be preferably used.

A preferable average particle size of fine particles for forming surface protrusion is 0.5 - 5.0 $\mu$m, more preferably 1.0 - 3.0 $\mu$m. When the average particle size is less than 0.5 $\mu$m, a large amount of the particles unpreferably needs to be added to achieve good slip property, and conversely, when it exceeds 5.0 $\mu$m, the surface roughness of the film becomes unpreferably too high to satisfy the practical aspect.

As the silica fine particles, those having a micropore volume of 0.8 - 1.8 ml/g can be preferably used, and porous particles having a micropore volume within the range of 1.1 - 1.4 ml/g are more preferably used. The micropore volume means the volume (ml/g) of micropores contained per 1 g of the fine particles. While such silica fine particles can be generally obtained by pulverizing synthetic silica and classifying them, porous silica fine particles directly obtained as spherical fine particles during synthesis can also be used. Such silica fine particles are aggregates of primary particles, where the gaps between primary particles and primary particles form micropores.

The micropore volume can be adjusted by changing the synthesis conditions of silica fine particles. When the micropore volume is smaller, good slip property can be afforded with a small amount thereof. When silica fine particles having a small micropore volume are used, many voids are produced during the drawing step of the polyamide resin added, which may sometimes degrade the transparency of the film. Therefore, to suppress production of voids during a drawing step and ensure a haze of not more than 2.0% required for packaging use, silica fine particles having a micropore volume of not less than 0.8 ml/g needs to be selected. When silica fine particles having a high micropore volume are used, a highly transparent film showing good slip property under high humidity conditions can be obtained by increasing the amount thereof to be added. However, such a high amount of addition causes inconvenience in that a dispersion failure of silica fine particles in a polyamide resin results in easy occurrence of defects in the film such as fish-eye and the like. To suppress such defects such as fish-eye and the like, therefore, it is necessary to select silica fine particles of 1.8 ml/g or below. Since transparency of a biaxially-oriented film also varies depending on the drawing conditions (temperature and draw ratio) or conditions of subsequent relaxation treatment (relaxation rate and temperature), these conditions are desirably controlled appropriately.

As a method for adding silica fine particles to a polyamide resin, a method comprising addition during a polymerization step in the production of a polyamide resin is preferable. Using this method, silica fine particles can be easily and uniformly dispersed in a polyamide resin. Particularly, silica fine particles having a relatively high micropore volume cannot be easily dispersed uniformly in a polyamide resin after polymerization by melt kneading and the like, and defects such as fish-eye and the like tend to easily occur in a film after drawing. Therefore, silica fine particles are desirably added during a polymerization reaction.

On the other hand, polyamide resins, particularly, nylon 6 etc. produced by ring opening polymerization of lactam contain a large amount of monomer and oligomer in a polymerization product, and adversely affect the properties of the film. Therefore, they need to be removed by extraction with hot water etc. after completion of the polymerization reaction. When silica fine particles are added during the polymerization reaction, silica fine particles flow out in a large amount along with the monomer and oligomer during the extraction step. The silica fine particles that flew out become an obstacle for the recovery of monomer and oligomer. In addition, the economical loss due to the flowing out of the silica particles cannot be disregarded. When silica fine particles having the aforementioned micropore volume of 0.8 - 1.8 ml/g are used, the amount of addition can be reduced, which in turn enables reduction of the amount of silica fine particles flown out during the extraction step.

A preferable average particle size of silica fine particles is 1.0 - 10.0 $\mu$m, more preferably 1.5 - 3.0 $\mu$m. When the average particle size is less than 1.0 $\mu$m, a large amount the particles unpreferably needs to be added to afford good slip property, and conversely, when it exceeds 10.0 $\mu$m, the surface roughness of the film becomes too high to unpreferably degrade the appearance.

The average particle size of silica fine particles was measured as follows.

Silica fine particles were dispersed in ion exchange water stirred at a given rotation speed (about 5000 rpm) using a high speed stirrer, the dispersion was added to ISOTON (saline) and further dispersed by an ultrasonic homogenizer, particle size distribution was determined by a Coulter counter method, and the particle size at 50% of weight cumulative distribution was calculated as the average particle size.

Furthermore, the content ratio of the silica fine particles in a polyamide resin film is 0.03 - 0.60 wt%, more preferably 0.08 - 0.30 wt%. When the content of silica fine particles is less than 0.03 wt%, the slip property of a biaxially-oriented film under high humidity is unpreferably not improved sufficiently, and conversely, when the content exceeds 0.60 wt%, the amount of runoff increases in the extraction step, and transparency of the film unpreferably becomes intolerably poor. When a method comprising addition of silica fine particles in the polymerization reaction step is employed, since a flow loss of about 5 - 20 wt% occurs in an extraction step of monomer or oligomer even in the case of fine particles having the aforementioned preferable micropore volume, the amount of fine particles to be added needs to be adjusted to such amount that makes the content in the film to finally fall within the aforementioned preferable range, in consideration of the flow loss.

The biaxially oriented polyamide resin film of the present invention contains a polyamide resin and fine particles for forming a surface protrusion as essential components. It is also possible to add various other additives, such as lubricant, anti-blocking agent, thermal stabilizer, antioxidant, antistatic agent, light shielding agent, impact resistance improving agent and the like, as long as the aforementioned property is not inhibited. Particularly, addition of an organic lubricant having an effect of decreasing the surface energy, to the extent that the adhesiveness and wetting property are free of problems is preferable, because more superior slip property and transparency can be conferred to a stretched film.

The production method of the biaxially oriented polyamide resin film of the present invention is characterized by a two-step longitudinal drawing of a non-oriented sheet, followed by transverse drawing (hereinafter the drawing method is referred to as a longitudinal-longitudinal-transverse drawing method). What are important to the production method of the biaxially oriented polyamide resin film of the present invention are a two-step longitudinal direction for the first drawing, and a ratio of the longitudinal first draw ratio and the second draw ratio of "1" or above. Using such step, the orientation after longitudinal drawing can be reduced and the draw stress can be decreased during the transverse drawing. As a result, it is considered that misalignment due to moisture absorption can be decreased without degrading other properties. The ratio of the longitudinal first draw ratio and the second draw ratio is preferably not more than "2".

The temperature of the first drawing during longitudinal drawing is preferably Tc+5 - Tc+30˚C. When the drawing temperature in the first step is less than Tc, the orientation proceeds and the stress during second drawing increases unpreferably. Conversely, when it exceeds Tc+30˚C, thermal crystallization is promoted and whitening due to crystallization unpreferably occurs during transverse drawing, though the second drawing can be performed. The first draw ratio is preferably 1.8 - 2.5. When the draw ratio of the first drawing is less than 1.8, the draw tension becomes too low to perform uniform drawing and the total longitudinal draw ratio cannot be increased, and conversely, when the draw ratio of the first drawing exceeds 2.5, the oriented crystallization proceeds too much and the second drawing becomes unpreferably difficult. To achieve such first drawing, it is preferable to decrease the draw stress by slow drawing by extending the deformation zone of the film, rather than rapid drawing at close intervals by shortening draw roll intervals. It is also possible to perform the first drawing in multiple steps.

As used herein, the glass transition temperature (Tg) and low temperature crystallization temperature (Tc) were determined by freezing a non-oriented polyamide resin sheet in liquid nitrogen, thawing the film under reduced pressure, measured Tg and Tc using DSC manufactured by Seiko Instruments Inc. at a temperature rise rate of 10˚C/min.

Furthermore, the film after first drawing is maintained at not less than Tg, and subjected to the second drawing in the longitudinal direction at 1.1- to 2.0-fold to make the total longitudinal draw ratio fall within 3.0 - 5.0. When the temperature of the film after the first drawing is lower than a given temperature, crystallization and formation of hydrogen bond are promoted during a re-heating process for the second drawing, which unpreferably renders the second drawing difficult. From such aspects, the temperature is preferably maintained at not less than Tg+10˚C between the first drawing and the second drawing. In industrial production, moreover, since the remaining heat from the first drawing at high speed can be directly utilized, the process is highly efficient.

The temperature of the second drawing during longitudinal drawing is preferably Tc - Tc+15˚C. A temperature of the second drawing of less than Tc is not preferable because orientation proceeds to make uniform transverse drawing difficult to perform and misalignment due to moisture absorption becomes large. Conversely, a second drawing temperature exceeding Tc+15˚C is not preferable because crystallization similarly increases the misalignment due to moisture absorption. In addition, the total longitudinal draw ratio is preferably 3.3 - 4.5. A total longitudinal draw ratio of less than 3.0 is unpreferable because producibility becomes extremely bad, and conversely, a total longitudinal draw ratio exceeding 6.0 is unpreferable, because the orientation markedly proceeds and breakage becomes frequent during transverse drawing.

In the production method of the biaxially oriented polyamide resin film of the present invention, the transverse drawing is preferably performed at a temperature of 120 - 140˚C to draw about 4.0- to 5.5-fold. A draw ratio of the transverse drawing which is lower than the above-mentioned range is unpreferable, because the strength (strength etc. upon 5% elongation) in the width direction becomes low to an impractical level, and conversely, a draw ratio of the transverse drawing which is higher than the above-mentioned range is unpreferable, because the heat shrink ratio in the width direction becomes high. On the other hand, a temperature of the transverse drawing which is lower than the above-mentioned range is unpreferable, because the boil distortion becomes high to an impractical level, and conversely, a temperature of the transverse drawing which is higher than the above-mentioned range is unpreferable, because the strength (strength etc. upon 5% elongation) in the width direction becomes low to an impractical level.

In the production method of the biaxially oriented polyamide resin film of the present invention, the heat setting treatment is preferably performed at a temperature of 180 - 230˚C. A temperature of the heat setting treatment which is lower than the above-mentioned range is unpreferable, because the heat shrink ratio in the longitudinal direction and width direction becomes high, and conversely, a temperature of the heat setting treatment which is higher than the above-mentioned range is unpreferable, because the impact strength of the biaxially-oriented film becomes low.

In addition, the thickness of the biaxially oriented polyamide resin film of the present invention can be set to any thickness within the range of 5 - 250 $\mu$m. For general food packaging use, a film having a thickness of 10 - 50 $\mu$m can be preferably used.

Moreover, a further heat treatment or humidity conditioning treatment can be applied to the biaxially oriented polyamide resin film of the present invention to further improve the size stability, and a corona treatment, coating treatment or flame treatment can be applied to further improve the adhesiveness or wetting property.

**Examples**

The present invention is explained in more detail in the following by referring to Examples. The present invention is not limited by the following Examples, and various modifications may be made without departing from the spirit of the present invention before practicing the invention, which are all encompassed in the technical scope of the present invention. The evaluation methods of the property and characteristics of the film are as follows.

[$\mu$d at 65% RH]

Under an atmosphere of 20˚C, 65% RH, $\mu$d was measured according to ASTM-D1894. A film having $\mu$d of not more than 1.2 at 65% RH can be evaluated to have good slip property and superior workability.

[Tg and Tc]

A non-oriented polyamide resin sheet was frozen in liquid nitrogen, thawed under reduced pressure and Tg and Tc were measured using DSC manufactured by Seiko Instruments Inc. under conditions of temperature rise rate of 10˚C/min.

[haze]

According to JIS-K-7105 (test method of optical property of plastic), diffuse transmittance and total light transmittance of 5 cm square sample film were measured by an integrating sphere light transmittance measurement apparatus, and the ratio of diffuse transmittance and total light transmittance was calculated as a haze by the following formula 1.

$$H=Td/Tt×100··(1)$$

In the formula 1, H is haze (%), Td is diffuse transmittance (%) and Tt is total light transmittance *(%).

[misalignment due to moisture absorption]

As shown in Fig. 1 (a), two sample pieces (square of 700 mm one side) were cut out from a biaxially oriented polyamide film immediately after film forming, wherein the center was each position at 550 mm inside from the right and left terminal portions, and each sample was stood at 23˚Cx65% RH for not less than 24 hr (apexes at the outside front, the outside back, the inside front and the inside back of each sample cut out were a, b, c and d, respectively). Thereafter, as shown in Fig. 1 (b), each sample was superimposed on a square of one side 700 mm (standard square) having α, β, γ and δ as apexes in such a manner that the apex α and side αβ of the standard square match the apex a and side a, b of the sample, the amount of misalignment (B) in the longitudinal direction between b of the sample and β of the standard square, amount of misalignment (C) in the longitudinal direction between c of the sample and γ of the standard square, and amount of misalignment (D) in the width direction between d of the sample and δ of the standard square were determined, and the misalignment due to moisture absorption of respective samples on the right side and the left side was calculated by the following formula 2. The average value of the misalignment due to moisture absorption of each sample was calculated.

$$misalignment \ due \ to \ moisture \ absorption \ (mm/700$$
$$mm)=(B+C+D)/2··(2)$$

[boil distortion]

A sample was cut out in the same manner as in the above-mentioned "misalignment due to moisture absorption" except that one side of the square was 21 cm, and each sample was stood for not less than 2 hr at 23˚C, 65% RH. A circle of diameter 20 cm about the center of the sample was drawn, straight lines passing through the center of the circle were drawn in the 0˚ - 165˚ direction at 15˚ intervals in the clockwise direction with the longitudinal direction as 0˚, and the diameter of each direction was measured and used as the length before treatment. Then, the sample was heat treated in boiling water for 30 min, taken out, wiped to remove water attached to the surface, air-dried and stood in an atmosphere of 23˚C, 65% RH for not less than 2 hr. The length of the straight line drawn in each diameter direction was measured again and taken as the length after treatment. The boiling water shrinkage proportion was calculated by the following formula 3. Thereafter, the absolute value (%) of the difference in the boiling water shrinkage proportions in the 45˚ direction and 135˚ direction were calculated as the boil distortion. The average value of the misalignment due to moisture absorption of each sample was calculated.

$$boiling \ water \ shrinkage \ proportion=[(length \ before$$
$$treatment \ - \ length \ after \ treatment)/length \ before$$
$$treatment] \ ×100(\%)··(3)$$

[process applicability]

A sample film was dry laminated on a biaxially-oriented nylon 6 film coated with an ester adhesive (TM590 manufactured by Toyo-Morton, Ltd. and CAT56 manufactured by the same company) at a solid content of 3 g/m². Then, the laminate film was folded in two in parallel to the winding length direction using a test sealer manufactured by Nishibe Kikai Co., Ltd., while continuously heat-sealing 20 mm of each of the both ends in the longitudinal direction at 150˚C, and 10 mm in the perpendicular direction thereto was continually heat-sealed at 150 mm intervals to give a 200 mm wide semiproduct. The both ends were cut in the winding length direction to make the sealed part 10 mm. The film was cut in the perpendicular direction thereto at the boundary of the sealed part to give a three-side sealed bag (sealing width: 10 mm). Ten of these bags were heat-treated in boiling water for 30 min, maintained in an atmosphere of 23˚C, 65% RH for one day, these 10 bags were piled and a 1 Kg load was applied to the entire surface of the bag from the top. After keeping them for one day, the load was removed and the degree of retortion (S-curl) of the bags was evaluated as in the following.

⊙: no retortion

○: slight retortion

✕: clear retortion

✕✕: marked retortion

[Example 1]

Nylon 6 obtained by ring opening polymerization of ε-caprolactam using a 100 liter batch polymerization vessel was used as a polyamide resin. The chips of nylon 6 were extraction-treated with hot water in a batch polymerization vessel, and the contents of the monomer and oligomer were reduced to 1 wt%. The chips were dried to a moisture content of 0.1 wt% and used. The relative viscosity of the starting material nylon 6 and a stretched film was about 2.8 in a measurement value at 20˚C using a 96% concentrated sulfuric acid solution. The fine particles (0.45 wt%) used for forming surface protrusions were silica fine particles of micropore volume 1.6 cc/g, average particle size 1.8 μm (Sylysia 350 manufactured by Fuji Silysia Chemical Ltd.), which were dispersed in an aqueous solution of ε-caprolactam to be the starting material of nylon 6 in a high speed stirrer, charged in a polymerization vessel, and dispersed in nylon 6 in a polymerization step. Moreover, 0.15 wt% of N,N'-ethylenebisstearylamide (LIGHT-AMIDE WE-183 manufactured by Kyoeisha Chemical Co., Ltd.) was added, and the mixture was melt-extruded from a T dice of an extruder at a temperature of 260˚C and 50 m/min, and electrostatically adhered closely onto a metal roll cooled to 30˚C by application of a direct high voltage for cooling solidification to give a substantially non-oriented sheet having a thickness of 200 μm.

The sheet had a Tg of 50˚C, and a Tc of 69˚C. The sheet was firstly drawn 2.20-fold in the longitudinal direction at a drawing temperature of 85˚C, maintained at 70˚C, subsequently secondly drawn 1.50-fold in the longitudinal direction at a drawing temperature of 70˚C, and continuously led to a stenter, transversely drawn 4.0-foldg at 130˚C. After heat setting at 210˚C and 6.1% transverse relaxation treatment, the sheet was cooled, the both ends were cut off and the sheet was wound to give a roll-like biaxially oriented polyamide resin film. The film temperature (drawing temperature) during the longitudinal drawing was measured using a radiation thermometer IR-004 manufactured by Minolta. In addition, the drawing temperature during the transverse drawing was measured by a thermocouple set in the tenter. Thereafter, the haze, misalignment due to moisture absorption, boil distortion and μd at 65% RH of the obtained biaxially oriented polyamide resin film were evaluated. The evaluation results of the properties are shown in Table 2.

[Examples 2 - 4]

In the same manner as in Example 1 except that the drawing conditions were changed to those shown in Table 1, the biaxially oriented polyamide resin films of Examples 2 - 4 were obtained. The evaluation results of the properties of the obtained biaxially oriented polyamide resin films are shown in Table 2. [Comparative Example 1]

A substantially non-oriented sheet obtained by a method similar to that of Example 1 was firstly drawn 1.52-fold in the longitudinal direction at a drawing temperature of 85˚C, maintained at 70˚C, subsequently secondly drawn 2.20-fold in the longitudinal direction (total longitudinal draw ratio=3.4) at a drawing temperature of 70˚C, and continuously led to a stenter, transversely drawn 4.0-foldg at 130˚C. After heat setting at 210˚C and 6.1% transverse relaxation treatment, the sheet was cooled, and the both ends were cut off to give a biaxially oriented polyamide resin film of Comparative Example 1. The evaluation results of the properties of the obtained biaxially oriented polyamide resin films are shown in Table 2. [Comparative Example 2]

A substantially non-oriented sheet obtained by a method similar to that of Example 1 was firstly drawn 1.7-fold in the longitudinal direction at a drawing temperature of 75˚C, subsequently secondly drawn 2.0-fold in the longitudinal direction (total longitudinal draw ratio=3.4) at a drawing temperature of 70˚C, and continuously led to a stenter, transversely drawn 4-foldg at 130˚C. After heat setting at 210˚C and 5% transverse relaxation treatment, the sheet was cooled, and the both ends were cut off to give a biaxially oriented polyamide resin film of Comparative Example 2. The evaluation results of the properties of the obtained biaxially oriented polyamide resin films are shown in Table 2.

[Examples 5 - 7]

In the same manner as in Example 1 except that the micropore volume and addition concentration of the fine particles for forming a surface protrusion used in Example 1 were changed to those shown in Table 1, the biaxially oriented polyamide resin films of Comparative Examples 3 - 5 were obtained. The evaluation results of the properties of the obtained biaxially oriented polyamide resin films are shown in Table 2.

[Comparative Examples 3 - 6]

In the same manner as in Example 1 except that the longitudinal drawing conditions were changed to those shown in Table 1, the biaxially oriented polyamide resin films of Comparative Examples 6 - 10 were obtained. The evaluation results of the properties of the obtained biaxially oriented polyamide resin films are shown in Table 2.

[Example 8]

In the same manner as in Example 1 except that the longitudinal drawing conditions were changed to those shown in Table 1, the biaxially oriented polyamide resin film of Example 8 was obtained. The evaluation results of the properties of the obtained biaxially oriented polyamide resin film are shown in Table 2.

[Comparative Example 7]

A substantially non-oriented sheet obtained by a method similar to that of Example 1 was drawn 3.0-fold in the longitudinal direction at a drawing temperature of 60˚C, the sheet after longitudinal drawing was continuously led to a stenter, transversely drawn 4-fold at 130˚C. After heat setting at 210˚C and 6.1% transverse relaxation treatment, the sheet was cooled, and the both ends were cut off to give a biaxially oriented polyamide resin film of Comparative Example 11. The evaluation results of the properties of the obtained biaxially oriented polyamide resin film are shown in Table 2.

[Comparative Example 8]

In the same manner as in Comparative Example 7 except that the longitudinal draw ratio was changed to 3.45, the biaxially oriented polyamide resin films of Comparative Example 12 was obtained. The evaluation results of the properties of the obtained biaxially oriented polyamide resin film are shown in Table 2.
[Table 1]

| | film forming conditions | | | | | | | | | | |
| | micropore volume of particles | amount of particles added (weight | first drawing | | second drawing | | λ1/λ2 | temperature (˚C) | ratio | heat setting (˚C) | relaxation treatment (%) |
| | | | temperature (˚C) | ratio λ1 | temperature (˚C) | ratio λ2 | | | | | |
|---|---|---|---|---|---|---|---|---|---|---|---|
| Ex. 1 | 1.30 | 0.45 | 85 | 2.20 | 70 | 1.50 | 1.47 | 130 | 4.0 | 210 | 6.1 |
| Ex. 2 | 1.30 | 0.45 | 85 | 2.10 | 70 | 1.60 | 1.31 | 130 | 4.0 | 210 | 6.1 |
| Ex. 3 | 1.30 | 0.45 | 90 | 2.10 | 70 | 1.60 | 1.31 | 130 | 4.0 | 210 | 6.1 |
| Ex. 4 | 1.30 | 0.45 | 85 | 2.30 | 70 | 1.50 | 1.53 | 130 | 4.0 | 210 | 6.1 |
| Comp. Ex. 1 | 1.30 | 0.45 | 85 | 1.52 | 70 | 2.20 | 0.69 | 130 | 4.0 | 210 | 5.0 |
| Comp. Ex. 2 | 1.30 | 0.45 | 75 | 1.70 | 60 | 2.00 | 0.85 | 130 | 4.0 | 210 | 6.1 |
| Ex. 5 | 1.30 | 0.60 | 85 | 2.20 | 70 | 1.50 | 1.47 | 130 | 4.0 | 210 | 6.1 |
| Ex. 6 | 1.16 | 0.08 | 85 | 2.20 | 70 | 1.50 | 1.47 | 130 | 4.0 | 210 | 6.1 |
| Ex. 7 | 1.80 | 0.70 | 85 | 2.20 | 70 | 1.50 | 1.47 | 130 | 4.0 | 210 | 6.1 |
| Comp. Ex. 3 | 1.30 | 0.45 | 85 | 1.20 | 70 | 2.80 | 0.43 | 130 | 4.0 | 210 | 6.1 |
| Ex. 8 | 1.30 | 0.45 | 85 | 2.80 | 70 | 1.20 | 2.33 | 130 | 4.0 | 210 | 6.1 |
| Comp. Ex. 4 | 1.30 | 0.45 | 75 | 2.20 | 60 | 1.50 | 1.47 | 130 | 4.0 | 210 | 6.1 |
| Comp. Ex. 5 | 1.30 | 0.45 | 85 | 2.20 | 90 | 1.50 | 1.47 | 130 | 4.0 | 210 | 6.1 |
| Comp. Ex. 6 | 1.30 | 0.45 | 90 | 2.60 | 80 | 2.00 | 0.43 | 130 | 4.0 | 210 | 6.1 |
| Comp. Ex. 7 | 1.30 | 0.45 | 60 | 3.00 | - | - | - | 130 | 4.0 | 210 | 6.1 |
| Comp. Ex. 8 | 1.30 | 0.45 | 60 | 3.45 | - | - | - | 130 | 4.0 | 210 | 6.1 |

[Table 2]

| | film forming conditions | | | |
|---|---|---|---|---|
| | misalignment (mm) due to moisture absorption | boil distortion (%) | haze (%) | μd (65% RH) |
| Example 1 | 3.4 | 2.2 | 1.5 | 0.54 |
| Example 2 | 3.5 | 2.1 | 1.5 | 0.49 |
| Example 3 | 2.9 | 2.4 | 1.3 | 0.54 |
| Example 4 | 2.5 | 2.6 | 1.3 | 0.56 |
| Comparative Example 1 | 5.0 | 2.8 | 1.7 | 0.45 |
| Comparative Example 2 | 6.0 | 3.2 | 1.5 | 0.90 |
| Example 5 | 3.2 | 2.1 | 2.8 | 0.50 |
| Example 6 | 3.4 | 2.2 | 2.5 | 1.00 |
| Example 7 | 3.4 | 2.2 | 1.5 | 1.04 |
| Comparative Example 3 | 4.5 | 2.9 | 1.6 | 1.12 |
| Example 8 | 3.8 | 2.8 | 1.7 | 0.93 |
| Comparative Example 4 | 7.0 | 3.5 | 1.5 | 1.12 |
| Comparative Example 5 | 6.0 | 3.2 | 2.1 | 0.90 |
| Comparative Example 6 | 5.5 | 3.8 | 1.6 | 0.90 |
| Comparative Example 7 | 5.0 | 2.7 | 1.4 | 0.93 |
| Comparative Example 8 | 7.0 | 2.7 | 1.3 | 0.98 |

As is clear from Table 2, the biaxially oriented polyamide resin films of Examples 1 - 4 showing misalignment due to moisture absorption, boil distortion, haze and kinetic friction coefficient at 65% RH, which are within the range of claims, showed good processability during bag manufacture process, as well as good appearance when processed into bags. In contrast, the biaxially oriented polyamide resin films of Comparative Examples 1 - 12 showing misalignment due to moisture absorption, boil distortion, haze and kinetic friction coefficient at 65% RH, which are outside the range of claims, showed many S-curl phenomena during bag manufacture process, and the appearance after processing into bags was also poor.

**Industrial Applicability**

Since the biaxially oriented polyamide resin film of the present invention shows superior processability as mentioned above, it can be preferably used for the packaging of various kinds of products.

**Claims**

1. A biaxially oriented film made from a polyamide resin, which shows a misalignment due to moisture absorption of 2.0 - 4.0 mm and a boil distortion of 2 - 3%.

2. The biaxially oriented polyamide resin film of claim 1, which shows a haze of 1 - 2%.

3. The biaxially oriented polyamide resin film of claim 1, which shows a kinetic friction coefficient at 65% RH of 0.5 - 0.8.

4. A production method of a polyamide resin film, which comprises drawing, in the longitudinal direction, a substantially non-oriented sheet made from a polyamide resin containing fine particles for forming a surface protrusion, and drawing the film in the transverse direction by a sequential biaxial drawing method, wherein said longitudinal drawing comprises drawing 1.2- to 3.0-fold at a low temperature crystallization temperature (Tc)+5 - Tc+30˚C for the first drawing and maintaining the film at not less than the glass transition temperature (Tg), and then drawing the film to 3.0- to 5.0-fold in the total longitudinal draw ratio at Tc - Tc+15˚C for the second drawing.

**5.** The production method of claim 5, wherein the first drawing ratio in the longitudinal drawing is greater than that of the second drawing.

# FIG. 1

(a)

end, R

a    c

550mm

700mm

b    d

film
travel
direction

c    a

d    b

end, L

(b)

a

c

α    γ

b    d

β    δ

side, R

c

a

γ    α

d    b

δ    β

side, L

**INTERNATIONAL SEARCH REPORT**

| International application No. |
| --- |
| PCT/JP2005/014621 |

A. CLASSIFICATION OF SUBJECT MATTER
Int.Cl⁷ $B29C55/14$, $C08J5/18//B29K77:00$, $C08L77:00$

According to International Patent Classification (IPC) or to both national classification and IPC

B. FIELDS SEARCHED

Minimum documentation searched (classification system followed by classification symbols)
Int.Cl⁷ $B29C55/00-55/30$

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho    1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 9-272748 A (Toyobo Co., Ltd.), 21 October, 1997 (21.10.97), Claim 4; Par. No. [0039]; example 7 (Family: none) | 1-5 |
| X<br>Y | JP 7-290565 A (Toyobo Co., Ltd.), 07 November, 1995 (07.11.95), Claim 1; Par. No. [0016]; example 5 (Family: none) | 1,4,5<br>2,3 |
| Y | JP 2002-86555 A (Toyobo Co., Ltd.), 26 March, 2002 (26.03.02), Par. No. [0010]; example 1 (Family: none) | 2,3 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>31 August, 2005 (31.08.05) | Date of mailing of the international search report<br>20 September, 2005 (20.09.05) |
| --- | --- |
| Name and mailing address of the ISA/<br>Japanese Patent Office | Authorized officer |
| Facsimile No. | Telephone No. |

Form PCT/ISA/210 (second sheet) (January 2004)

| INTERNATIONAL SEARCH REPORT | International application No. |
| --- | --- |
| | PCT/JP2005/014621 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2-187431 A  (Toray Industries, Inc.),<br>23 July, 1990 (23.07.90),<br>Claim 2; examples 1 to 4<br>(Family: none) | 2,3 |
| P,X | JP 3671978 B1  (Toyobo Co., Ltd.),<br>13 July, 2005 (13.07.05),<br>Claims 11, 16; examples 1 to 7<br>(Family: none) | 1-5 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9272748 A

- JP 8174663 A